# EUROPEAN PATENT SPECIFICATION

(11) **EP 2 477 448 B1**
(45) Date of publication and mention of the grant of the patent: **30.03.2016**
(21) Application number: 11000225.0
(22) Date of filing: 13.01.2011
(51) Int. Cl.: H04W 76/02

(54) **Method of re-establishing an interrupted communication connection and telecommunication system therefor**
Verfahren zur Wiederherstellung einer unterbrochenen Kommunikationsverbindung und Telekommunikationssystem dafür
Procédé pour rétablir une connexion de communication interrompue et système de télécommunication correspondant

(43) Date of publication of application: 18.07.2012
(73) Proprietor: Telefónica Germany GmbH & Co. OHG, 80992 München (DE)
(72) Inventor: Ponto, Martin, 63486 Bruchköbel (DE); Schmidt, Holger, 33102 Paderborn (DE)
(74) Representative: Herrmann, Uwe

(56) References cited:
- EP-A1- 1 480 427
- US-A1- 2007 274 488
- US-A1- 2008 254 787
- MAHY CISCO SYSTEMS R ET AL: "The Session Initiation Protocol (SIP) Replaces Header; rfc3891.txt", IETF STANDARD, INTERNET ENGINEERING TASK FORCE, IETF, CH, 1 September 2004 (2004-09-01), XP015009668, ISSN: 0000-0003

## Description

The present invention is directed to a method of re-establishing an interrupted communication connection between a first and a second subscriber of a telecommunication network and a telecommunication system adapted for processing said method.

There is currently a high interest to provide more specific services to the subscribers of a telecommunication system or to improve existing services of the system. In particular, subscribers of a telecommunication system attach value to an increasing quality of voice communication throughout the system assuming very stable connections between at least two subscribers.

Technical problems of network components and subscriber devices or unforeseen outside influences can lead to annoying connection losses. The partners have to re-establish their connection manually by redialling the destination number of their calling partner. However, there are several scenarios which can result in a conflict situation complicating or avoiding a re-establishment of the lost connection.

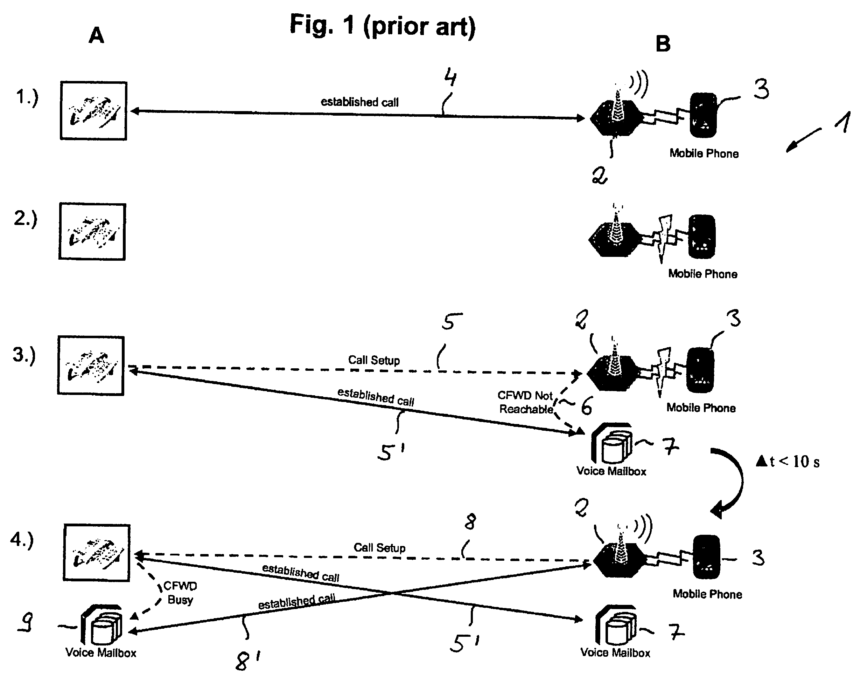

An example scenario is displayed by figure 1 and is described in the following. A telecommunication system comprises at least two subscribers A, B wherein a voice call 4 between both subscribers A, B has been established (step 1). Since subscriber B is using a mobile telephone platform a signal loss between the base station 2, such as base transceiver station (BTS), NodeB, eNodeB etc., and the mobile device 3 can appear if subscriber B passes an area without mobile network coverage (step 2).

Subscriber A realizes the connection loss and attempts to re-establish the connection to subscriber B by setting up a call 5 to subscriber B (step 3). Unfortunately, subscriber B is still located in an area without signal coverage and the Call Forwarding Not Reachable mechanism 6 of a network based call forwarding entity redirects the incoming call 5 to the voice box 7 of subscriber B. While subscriber A is still connected over the redirected call 5' to the voice box 7 subscriber B recovers the network coverage and initiates a call-back 8 to subscriber A which is forwarded to subscriber A's mailbox 9 due to the busy state of subscriber A (step 4) and established as connection 8'. Unfortunately, both parties A, B receive the respective voice mailboxes 7, 9 instead of their desired communication partner. It is in particular not unlikely that the depicted conflict situation remains after more than one re-establishment attempt of one or both subscribers A, B.

The longer both subscribers A, B need to re-establish a successful connection the bigger is the resulting customer dissatisfaction. In particular, if a mobile subscriber moves with a high velocity, e.g. in a car, and triggers frequent cell handovers connection losses will appear with a comparatively high probability. Further, a subscriber moving in a car won't be in a position to execute several re-establishment attempts.

An example for a possible reconnection method is disclosed in US 2007/0274488 A1. If an original call is inadvertently dropped the assigned device initiates reconnection by bypassing voicemails options that are typically encountered in a reconnection situation.

EP 1 480 427 describes a switching system which monitors a call between a calling and a called party and establishes the call when one of the parties has been or is being dropped.

The document Mahy Cisco Systems R et al: "The session Initiation Protocol (SIP) Repplaces Header", IETF Standard, Internet Engineering Task Force, IETF, CH, 1 September 2004, XP015009668, ISSN: 0000-0003 discusses the problem of redirecting SIP-Sessions.

US 2008/0254787 discloses another method for monitoring and reconnecting a dropped call session.

Therefore, the object of the present invention is to overcome the aforementioned conflict situations and to provide a more comfortable re-establishing service for a subscriber of a telecommunication system in case of connection losses.

The object is solved by a method according to claim 1. According to the invention said method ensures a re-establishing of an interrupted communication connection between a first and a second subscriber of a telecommunication network. One or both subscribers may have already initiated an unsuccessful and ongoing re-establishment attempt. That is to say, that a first subscriber has set up a connection request which is addressed to the second subscriber. Since the second subscriber is not reachable due to arbitrary reasons the request is handled by a mechanism, e.g. redirecting the request to a mailbox or playing an announcement like "customer not available".

Further, an auto-connect mechanism is implemented which is triggered by a re-establishment attempt of the first and/or second subscriber. Said attempt is a connection request of the first and/or second subscriber addressing the other subscriber. If such a trigger event appears the auto-connect mechanism redirects the re-establishment attempts of the first and second subscriber in such a manner that a communication connection between the first and second subscriber is established.

The inventive auto-connect mechanism avoids conflict situations as mentioned above. Without the inventive mechanism a re-establishment attempt of the second subscriber would also be unsuccessful.

One or both subscribers are preferably using a mobile communication device, such as a mobile phone, smartphone, PDA, etc., wherein the telecommunication system is based on at least one known standard as GSM, GPRS, UMTS and LTE.

At least one subscriber is preferably using a communication device (fixed platform) based on at least one telephone standard, for example POTS, ISDN, SIP or any other known standard. The other subscriber is preferably using a mobile communication device.

Both subscribers can use mainly identical, similar or differing platform standards, devices. That is to say the inventive method is also useful when interconnecting differing networks supplying differing communication standards, for example a mobile and fixed voice network.

The auto-connect mechanism can be implemented either at the first subscriber side and/or at the second subscriber side.

The disclosure of the present invention which is directed to the "first subscriber" also refers to and encompasses the "second subscriber" and vice versa.

In a preferred aspect of the invention said auto-connect mechanism checks the incoming connection requests at the first subscriber side and establishes a connection between the first and second subscriber if the incoming request is received from the second subscriber which is addressed by an ongoing establishment attempt of the first subscriber. For example, the first subscriber attempts to re-establish the connection by sending a connection request to the second subscriber. Due to any reason, said attempt is unsuccessful and is exemplarily handled by a mechanism forwarding the request to the mailbox of the second subscriber establishing a connection between the first subscriber and the second subscriber's mailbox. Subscriber A is in a "busy state" and is therefore not reachable. If the auto-connect mechanism receives an incoming request, it will check whether the originator refers to the addressed destination of the ongoing connection of subscriber A. If the destination and the originator match, the auto-connect mechanism establishes a connection between the first and second subscriber.

Preferably, the auto connect mechanism is activated when the first subscriber is in a busy case due to an initiated ongoing establishment attempt. Advantageously, the checking routine of the auto-mechanism checking incoming requests is only processed if the subscriber is in the busy state. In particular the busy state of the first subscriber is triggered by an unsuccessful and ongoing re-establishment attempt of the first subscriber. For example, possible busy cases are "Call Waiting", "Busy Signal" and "Call Forwarding Busy".

According to the invention said auto-connect mechanism checks the outgoing connection requests at the second subscriber side and establishes a connection between the first and second subscriber if the outgoing request is addressed to the first subscriber who is connected to a mailbox of the second subscriber. In other words, the re-establishment attempt of the first subscriber is not answered by the second subscriber and therefore is routed to the second subscriber's mailbox. At that point the auto-mechanism checks all outgoing requests at the second subscriber's side whether the destination address of one of the outgoing requests matches to the originator of the ongoing connection to the mailbox. If the originator address is in compliance with the destination address, the ongoing connection to the mailbox and the outgoing request will be redirected in such a manner that a connection between the first and second subscriber is established.

It is also conceivable that the connection between the first and second subscriber is bridged over the mailbox of the second subscriber. That is in particular practicable if a connection between at least one subscriber and mailbox already exists. The mailbox acts as a conference bridge.

Advantageously, the method provides a possibility for a flexible configuration of the auto-connect mechanism for either one of the first and second subscriber or both of them. For example, one or more parameters influencing the general functionality or specific aspects of the mechanism are configurable. In particular said mechanism is capable of being enabled or completely disabled by at least one subscriber.

To avoid confusion of the participating subscribers when re-establishment attempts are redirected one ore more subscribers are informed before establishing a connection between first and second subscriber. An advantageous possibility for indicating a following redirection is playing a short announcement and/or melody and/or a single tone to at least one of the subscribers. The indication can be triggered by the auto-connect mechanism itself or by a further network component.

Implementation of the inventive method, in particular the auto-connect mechanism is done by deploying it on a mobile or fixed voice platform of the telecommunication network which is responsible for at least one subscriber. A mobile platform can refer to a network element, such as a base transceiver station (BTS), base station controller (BSC), mobile switching center (MSC), home location register (HLR), intelligent network (IN) etc., of a mobile telecommunication network. A fixed platform refers to the respective component of a conventional telephone network which is adapted to support a subscriber of a fixed telephone device.

The method is preferable applicable to handle different kinds of connections in a telecommunication system being interrupted. For example, at least one interrupted communication connection refers to a voice call and/or a video call which is in particular executed through an IMS (IP multimedia subsystem).

Redirecting the re-establishment attempts of the first and second subscriber for establishing a communication connection between the first and second subscriber is advantageously done by means of a 3^{rd} party call control. A known 3^{rd} party call control mechanism is applicable to initiate a direct connection between two or more parties without being involved in the established connection.

On the other hand, if a SIP-protocol is used for signalling connection between the first and second subscriber, it is conceivable to make use of a well-known feature called "Replaces Header" standardized in the respective SIP-protocol according to RFC 3891.

The aforementioned method of re-establishing an interrupted connection between two subscribers requires that both subscribers initiate at least one re-establishing attempt before automatically re-connecting an interrupted connection. An alternative approach which does not refer to the invention makes the need of subscriber's re-establishment attempts redundant.

In detail, the said approach monitors an ongoing communication connection between a first and second subscriber by means of the telecommunication network and wherein a re-establishment of the communication connection is initiated by the telecommunication network in case of a detected connection loss of said connection. That is to say, that a connection and a respective connection loss is completely handled by the telecommunication system instead by the involved subscribers or the dedicated platforms. No subscriber action is required.

It is conceivable that the re-establishment of the communication is initiated (e. g. automatically) without any action from the first and/or second subscriber or that the re-establishment of the communication requires an action from the first and/or second subscriber, such as pressing a button of the phone, etc. A signal can be provided, such as an acoustic and/or optical and/or vibration signal. This signal can indicate to the subscriber that the communication connection has been re-established or can indicate to the subscriber that an action has to be taken by the subscriber, such as pressing a button, in order to re-establish the communication connection.

According to a further embodiment the method encompasses the feature that it is electable by the user whether a re-establishment of the communication connection is initiated without any action from the first and/or second subscriber and/or whether the re-establishment of the communication connection requires an action from the first and/or second subscriber.

Preferably, the detection of a connection loss is based on one or more criteria. For example, a reliable criterion for detecting a connection loss is an ended connection between a first and second subscriber without transmitting at least one disconnect signal before ending up the connection.

At least one criterion for detecting a connection loss might be the missing of voice related data in one or both directions of the communication.

Alternatively or additionally at least one criterion for detecting a connection loss is an indicated loss of signal by the transportation network of the telecommunication network. Said transportation network is generally responsible for the physical signal transmission. A loss of signal which leads to a connection loss is realized by said transportation network and preferably indicated by an automatically generated status message. In particular a signal/connection loss is indicated by a network component like the Gateway GPRS Support Node or the Packet Data Network Gateway of a mobile network.

Further, the present invention is directed to a telecommunication system, in particular to a mobile telecommunication system, with at least two subscribers wherein the system comprises first means for processing the method according to any of claims 1 to 8.

The system provides the necessary network topology consisting of several components. At least two subscribers using respective terminal devices can be connected over the network topology. Said terminal devices can be based on mobile platforms, such as mobiles, smartphones, laptops, etc., or can be based on fixed platforms. Further, the network topology provides means for redirecting connecting requests to a mailbox.

According to the invention the system comprises first means for processing the method according to any of claims 1 to 8. The inventive auto-connect mechanism can be realized by implementing the first means in the platforms dedicated to the respective terminal devices, for example a base station transceiver in a mobile network. Said implemented first means are either adapted to compare all incoming connection requests at a single platform to an ongoing connection of said platform or are adapted to compare all outgoing requests at one platform to an established connection to the respective mailbox of said platform. In general, the inventive first means for processing the method are implemented at the subscriber side and accordingly at a respective mobile/fixed voice platform dedicated to at least one subscriber.

Additionally or alternatively the system comprises second means for processing the method according to the aforementioned alternative approach which does not refer to the invention. Instead of implementing means at the subscriber side said second means are located at the network side. In particular, said means are connected to, integrated in or operate with one or more switching components of the network topology of a telecommunication system. Said second means monitor continuously an ongoing connection between at least two subscribers and re-establish said connection in case an unintentional connection loss is detected by the second means.

Further, the system comprises means for realizing a 3^{rd} party call control for redirecting re-establishment attempts of two or more subscribers and/or to initiate a connection between two or more subscribers. Additionally or alternatively the system comprises means to redirect connections on the bases of a known "Replace Header" mechanism according to SIP standard RFC 3891.

Obviously, the inventive telecommunication system comprises the same properties and advantages according to one of the preferred embodiments of the inventive methods.

Further advantages of the present invention are described on the basis of three figures which show:
- Figure 1:: a visualization of a problem scenario appearing in a prior art telecommunication system,
- Figure 2:: a first embodiment of the present invention and
- Figure 3:: a second embodiment of the present invention.

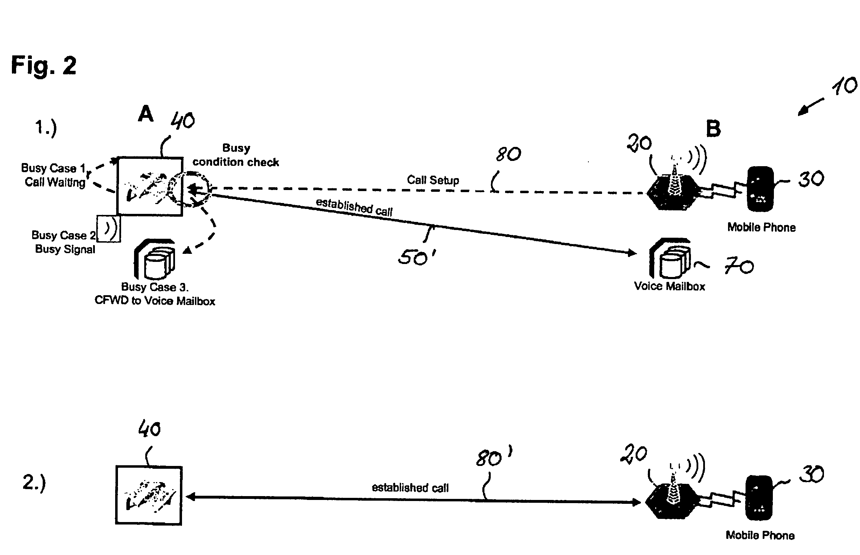

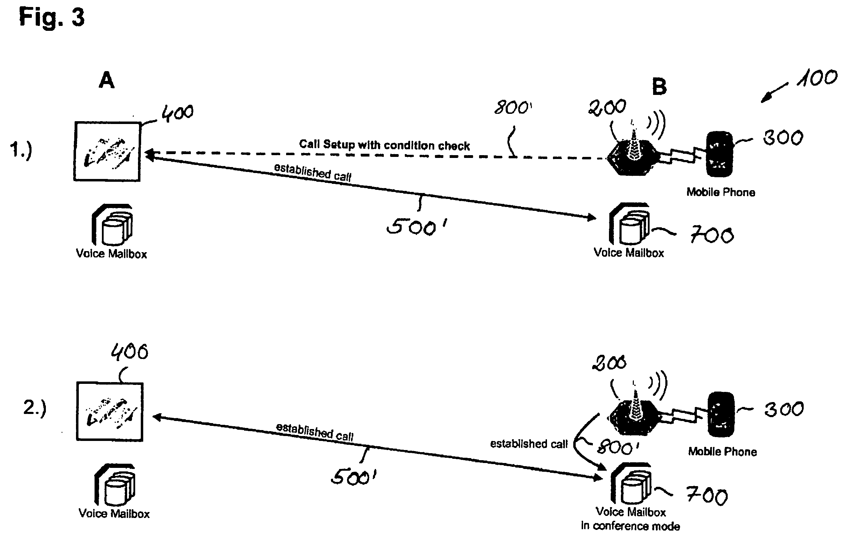

The example scenario according to figure 1 has already been described in detail. The system according to figure 1 has been adapted to attain the inventive system 10, 100 according to the preferred embodiments shown in figures 2, 3.

The present invention according to an embodiment called "Called party based solution" is explained referring to figure 2. Figure 2 shows the telecommunication system 10 which is mostly identical to that of figure 1. Subscriber A is using a fixed telephone platform 40 and subscriber B uses a mobile device 30 which is interconnected over the base station transceiver 20 to the system 10.

Like in figure 1 the connection between subscriber A and B as depicted in figure 2 has been interrupted due to a connection loss between the base station transceiver 20 and the mobile device 30 of subscriber B. Subscriber A realizes the connection loss and attempts to re-establish the connection to subscriber B by setting up a call to subscriber B. Due to the fact that subscriber B is still located in an area without signal coverage the "Call Forwarding Not Reachable" mechanism of BTS 20 redirects the incoming call to the voice box 70 of subscriber B or any other predefined or definable (e. g. user or operator definable) destination by establishing the connection 50' between Subscriber A and B's mailbox 70 or said destination.

According to the invention means for processing the auto-connect mechanism are integrated in the fixed voice platform 40 of subscriber A. The state machine of platform 40 of subscriber A rests in a busy state since subscriber A is connected to B's mailbox 70 (step 1). The busy state can be categorized in three different kinds of busy states which are "Call waiting" referring to an outgoing and unanswered call request, "Busy signal" indicating a busy destination party and "Call Forwarding Busy" indicating a connection to the mailbox 70 of the destination party.

If the state machine of platform 40 reaches at least one of the mentioned busy states, the auto-connect mechanism will be activated and monitors all incoming call requests 80 at subscriber side A. While subscriber A is in busy state subscriber B recovers the network coverage and initiates a call-back 80 to subscriber A.

At platform 40 each incoming call request 80 is checked for its originator and is compared to the destination of the ongoing connection of subscriber A which is the established call 50' to the mailbox 70. In case of a matching comparison a 3^{rd} party call control will take control of the call management for automatically and directly connecting subscriber A and B (step 2). In detail the 3^{rd} party call control disconnects the established call 50' and puts the incoming request 80 of subscriber B at the platform 40 directly through to subscriber A. The established connection is labelled as the established call 80'. Before connecting subscriber A to subscriber B an announcement is played to subscriber A which indicates the process for directly connecting both subscribers.

In contrary to the scenario of figure 1 both subscribers will talk to each other instead of being connected to each other's mailboxes.

Preferably subscriber B will pay the bill for the re-established connection 80' between A and B. According to an advantageous aspect of the invention the implementation of the inventive method only assumes modification of the busy state of platform 40. Further, the inventive auto-connect mechanism is only activated if the platform 40 is in a busy state. The redirection of connections 50', 80 can also be handled by the known "Replace Header" mechanism of the respective SIP-standard RFC 3391. Therefore, it is required that it least on connection 50', 80 is based on SIP signalling.

Figure 3 depicts a telecommunication system 100 according to the invention. The system of figure 3 shows a "caller based solution". Step 1 of figure 3 shows the same scenario as figures 1, 2. The connection between subscriber A and B in figure 3 has been interrupted due to a connection loss between the base station transceiver (BTS) 200 and the mobile device 300 of subscriber B. Subscriber A realizes the connection loss and attempts to re-establish the connection to subscriber B by setting up a call to subscriber B. Due to the fact that subscriber B is still located in an area without signal coverage the "Call Forwarding Not Reachable" mechanism of a network based call forwarding entity redirects the incoming call 500' to the voice box 700 of subscriber B.

However, means for processing the auto-connect mechanism are integrated in the mobile voice platform, in particular the BTS 200 supplying subscriber B. At that time, each call setup 800 outgoing from subscriber B to an arbitrary destination party is monitored by the mechanism. The mechanism checks if the called party of the outgoing request 800 in platform 200 is designated for a destination party which is currently connected to the mailbox 700 of subscriber B. If this condition is true, the calls 500', 800 of subscriber A and B are indirectly connected over the mailbox system 700 of subscriber B which acts as a conference bridge (step 2). Subscriber A will bear the arising charges for the established connection 500', 800' between A and B.

Alternatively the calls 500', 800 can be redirected by a 3^{rd} party call control or on the basis of the "Replace Header" mechanism to directly connect subscribers A and B as it is depicted in step 2 of figure 2.

## Claims

1. A method of re-establishing an interrupted communication connection between a first (A) and a second subscriber (B) of a telecommunication network (10, 100), wherein an auto-connect mechanism is triggered by a re-establishment attempt of the first (A) and/or of the second subscriber (B) wherein the auto-connect mechanism redirects the re-establishment attempts of the first (A) and/or of the second subscriber (B) in such a manner that a communication connection between the first (A) and second subscriber (B) is established,
**characterised in**
**that** said auto-connect mechanism checks outgoing connection requests (800) at the second subscriber side (B) and establishes a connection (800') between the first (A) and second subscriber (B) if an outgoing request at the second subscriber side (800) is addressed to the first subscriber (A) who is connected to a mailbox (700) of the second subscriber (B) and wherein said connection between the first (A) and second subscriber (B) is established by using the mailbox (700) of the second subscriber (B) as a conference bridge.

2. The method according to claim 1 wherein said auto-connect mechanism checks an incoming connection request (80) at the first subscriber (A) side and establishes a successful connection (80') between the first (A) and second subscriber (B) if the incoming request (80) is received from the second subscriber (B) which is addressed by an ongoing establishment attempt (50') of the first subscriber (A).

3. The method according to claim 1 or 2 wherein said auto connect mechanism is activated if the first subscriber (A) is in a busy state due to an initiated ongoing establishment attempt (80), in particular the unsuccessful and ongoing re-establishment attempt.

4. The method according to any of the preceding claims wherein said auto-connect mechanism is configurable by either the first (A) or the second subscriber (B), in particular said mechanism is capable of being enabled or disabled by a subscriber.

5. The method according to any of the preceding claims wherein a short announcement and/or melody and/or a single tone is played by the auto-connect mechanism before redirecting the re-establishment attempts of the first (A) and second subscriber (B).

6. The method according to any of the preceding claims wherein said method is deployed on a mobile (20, 200) or fixed voice platform (40, 400) being responsible for at least one subscriber (A, B).

7. The method according to any of the preceding claims wherein said interrupted communication connection refers to a voice call and/or a video call, in particular a video call over an IP Multimedia Subsystem, IMS.

8. The method according to any of the preceding claims wherein redirecting the re-establishment attempts of the first (A) and second subscriber (B) for establishing a communication connection between the first (A) and second subscriber (B) is done by means of a 3^{rd} party control and/or by use of "Replaces Header" of a respective SIP-protocol according to RFC 3891.

9. A telecommunications system (10, 100), in particular a mobile telecommunications system, with at least two subscribers (A, B) wherein the system comprises first means for processing the method according to any of claims 1 to 8.

10. A telecommunications system (10, 100) according to claim 9 wherein the first means are implemented in at least one mobile (20, 200) and/or fixed voice platform (40, 400).

## Patentansprüche

1. Verfahren zum Wiederherstellen einer unterbrochenen Kommunikationsverbindung zwischen einem ersten (A) und einem zweiten Teilnehmer (B) eines Telekommunikationsnetzwerks (10, 100), wobei durch einen Wiederherstellungsversuch des ersten (A) und/oder des zweiten Teilnehmers (B) ein automatisch verbindender Mechanismus ausgelöst wird, wobei der automatisch verbindende Mechanismus die Wiederherstellungsversuche des ersten (A) und/oder des zweiten Teilnehmers (B) so umleitet, dass eine Kommunikationsverbindung zwischen dem ersten (A) und dem zweiten Teilnehmer (B) hergestellt wird,
**dadurch gekennzeichnet, dass**
der automatisch verbindende Mechanismus ausgehende Verbindungswünsche (800) an der Seite des zweiten Teilnehmers (B) prüft und zwischen dem ersten (A) und zweiten Teilnehmer (B) eine Verbindung (800') herstellt, wenn ein ausgehender Wunsch an der Seite (800) des zweiten Teilnehmers an den ersten Teilnehmer (A) adressiert wird, der mit einer Mailbox (700) des zweiten Teilnehmers (B) verbunden ist, und wobei die Verbindung zwischen dem ersten (A) und dem zweiten Teilnehmer (B) unter Verwenden der Mailbox (700) des zweiten Teilnehmers (B) als Konferenzbrücke hergestellt wird.

2. Verfahren nach Anspruch 1, wobei der automatisch verbindende Mechanismus einen eingehenden Verbindungswunsch (80) an der Seite des ersten Teilnehmers (A) prüft und eine erfolgreiche Verbindung (80') zwischen dem ersten (A) und dem zweiten Teilnehmer (B) herstellt, wenn der eingehende Wunsch (80) von dem zweiten Teilnehmer (B) erhalten wird, der durch einen laufenden Herstellungsversuch (50') des ersten Teilnehmers (A) adressiert wird.

3. Verfahren nach Anspruch 1 oder 2, wobei der automatisch verbindende Mechanismus aktiviert wird, wenn sich der erste Teilnehmer (A) aufgrund eines eingeleiteten laufenden Herstellungsversuchs (80), insbesondere des erfolglosen und laufenden Wiederherstellungsversuchs, in einem Besetzt-Zustand befindet.

4. Verfahren nach einem der vorhergehenden Ansprüche, wobei der automatisch verbindende Mechanismus entweder durch den ersten (A) oder den zweiten Teilnehmer (B) konfigurierbar ist, wobei insbesondere der Mechanismus durch einen Teilnehmer aktiviert oder deaktiviert werden kann.

5. Verfahren nach einem der vorhergehenden Ansprüche, wobei von dem automatisch verbindenden Mechanismus eine kurze Ansage und/oder Melodie und/oder ein einzelner Ton gespielt wird, bevor die Wiederherstellungsversuche des ersten (A) und des zweiten Teilnehmers (B) umgeleitet werden.

6. Verfahren nach einem der vorhergehenden Ansprüche, wobei das Verfahren auf einem Mobiltelefon (20, 200) oder einer festen Sprachplattform (40, 400), die für mindestens einen Teilnehmer (A, B) zuständig ist, eingesetzt wird.

7. Verfahren nach einem der vorhergehenden Ansprüche, wobei sich die unterbrochene Kommunikationsverbindung auf einen Sprachanruf und/oder eine Videoanruf, insbesondere einen Videoanruf über ein IP Multimedia System, bezieht.

8. Verfahren nach einem der vorhergehenden Ansprüche, wobei das Umleiten der Wiederherstellungsversuche des ersten (A) und des zweiten Teilnehmers (B) zum Herstellen einer Kommunikationsverbindung zwischen dem ersten (A) und dem zweiten Teilnehmer (B) mittels Steuerung durch einen Dritten und/oder durch Nutzung einer Ersatz-Kopfzeile ("Replaces Header") eines jeweiligen SIP-Protokolls gemäß RFC 3891 erfolgt.

9. Telekommunikationssystem (10, 100), insbesondere Mobiltelekommunikationssystem, mit mindestens zwei Teilnehmern (A, B), wobei das System erste Mittel zum Verarbeiten des Verfahrens nach einem der Ansprüche 1 bis 8 umfasst.

10. Telekommunikationssystem (10, 100) nach Anspruch 9, wobei die ersten Mittel in mindestens einem Mobiltelefon (20, 200) und/oder einer festen Sprachplattform (40, 400) implementiert sind.

## Revendications

1. Procédé pour rétablir une connexion de communication interrompue entre un premier (A) et un second abonné (B) d'un réseau de télécommunication (10, 100), un mécanisme d'auto-connexion étant déclenché par une tentative de rétablissement du premier (A) et/ou du second abonné (B), le mécanisme d'auto-connexion redirigeant les tentatives de rétablissement du premier (A) et/ou du second abonné (B) de telle manière qu'une connexion de communication entre le premier (A) et le second abonné (B) est établie,
**caractérisé en ce que**
ledit mécanisme d'auto-connexion vérifie des requêtes de connexion sortantes (800) du côté du second abonné (B) et établit une connexion (800') entre le premier (A) et le second abonné (B) si une requête sortante du côté du second abonné (800) est adressée au premier abonné (A) qui est connecté à une boîte aux lettres (700) du second abonné (B) et ladite connexion entre le premier (A) et le second abonné (B) étant établie au moyen de la boîte aux lettres (700) du second abonné (B) en tant que pont de téléconférence.

2. Procédé selon la revendication 1, dans lequel ledit mécanisme d'auto-connexion vérifie une requête de connexion entrante (80) du côté du premier abonné (A) et établit avec succès une connexion (80') entre le premier (A) et le second abonné (B) si la requête entrante (80) est reçue en provenance du second abonné (B) auquel est adressée une tentative d'établissement en cours (50') du premier abonné (A).

3. Procédé selon la revendication 1 ou 2, dans lequel ledit mécanisme d'auto-connexion est activé si le premier abonné (A) est dans un état occupé en raison d'une tentative d'établissement (80) en cours lancée, en particulier la tentative de rétablissement en cours et sans succès.

4. Procédé selon l'une quelconque des revendications précédentes, dans lequel ledit mécanisme d'auto-connexion est configurable soit par le premier (A) soit par le second abonné (B), en particulier ledit mécanisme est apte à être débloqué ou bloqué par un abonné.

5. Procédé selon l'une quelconque des revendications précédentes, dans lequel une brève annonce et/ou mélodie et/ou un son unique est émis par le mécanisme d'auto-connexion avant que les tentatives de rétablissement du premier (A) et du second abonné (B) soient redirigées.

6. Procédé selon l'une quelconque des revendications précédentes, dans lequel ledit procédé est déployé sur une plate-forme vocale mobile (20, 200) ou fixe (40, 400) qui est responsable d'au moins un abonné (A, B).

7. Procédé selon l'une quelconque des revendications précédentes, dans lequel ladite connexion de communication interrompue se réfère à un appel vocal et/ou un appel vidéo, en particulier un appel vidéo sur un sous-système multimédia IP, IMS.

8. Procédé selon l'une quelconque des revendications précédentes, dans lequel la redirection des tentatives de rétablissement du premier (A) et du second abonné (B) pour établir une connexion de communication entre le premier (A) et le second abonné (B) est effectuée au moyen d'un contrôle indirect et/ou au moyen de l'en-tête « replaces » d'un protocole SIP respectif selon RFC 3891.

9. Système de télécommunication (10, 100), en particulier système de télécommunication mobile, avec au moins deux abonnés (A, B), dans lequel le système comprend des premiers moyens destinés à exécuter le procédé selon l'une quelconque des revendications 1 à 8.

10. Système de télécommunication (10, 100) selon la revendication 9, dans lequel les premiers moyens sont mis en oeuvre dans au moins une plate-forme vocale mobile (20, 200) et/ou fixe (40, 400).
